Europäisches Patentamt

European Patent Office

Office européen des brevets

(19)

(11) Numéro de publication : **0 440 543 A1**

(12) # DEMANDE DE BREVET EUROPEEN

(21) Numéro de dépôt : **91400194.6**

(51) Int. Cl.⁵ : **B01D 53/36, E04H 13/00**

(22) Date de dépôt : **29.01.91**

(30) Priorité : **31.01.90 FR 9001142**

(43) Date de publication de la demande :
**07.08.91 Bulletin 91/32**

(84) Etats contractants désignés :
**AT BE CH DE DK ES FR GB GR IT LI LU NL SE**

(71) Demandeur : **SOGEA, Société Anonyme**
**Tour American International, 34, Place des**
**Corolles - Cédex 55**
**F-92079 Paris La Défense (FR)**
Demandeur : **EURO CASE, Société Anonyme**
**5, rue Denis Papin - B.P. 43**
**F-53400 Craon (FR)**
Demandeur : **COOL S.A.R.L.**
**Quai Jean Jaurès Boîte Postale 45**
**F-07800 La Voulte sur Rhône (FR)**

(72) Inventeur : **Berrebi, Georges**
**17, rue Barnave**
**F-26500 Bourg-Les-Valence (FR)**
Inventeur : **Cazalis, Pierre Paul**
**Résidence Dauphine**
**F-78430 Louveciennes (FR)**
Inventeur : **D'Outreligne, Dominique**
**Emmanuel**
**La Trichonnière, La Selle Croannaise**
**F-53800 Renaze (FR)**

(74) Mandataire : **Hasenrader, Hubert et al**
**Cabinet BEAU DE LOMENIE 55, rue**
**d'Amsterdam**
**F-75008 Paris (FR)**

(54) Catalyseur pour filtre d'épuration de caveau.

(57)   L'invention concerne un catalyseur pour filtre d'épuration des gaz échangés entre l'intérieur d'un caveau ou d'un enfeu et l'extérieur, caractérisé en ce qu'il renferme au moins un constituant choisi dans le groupe constitué par une matière amorphe et une zéolite. Le caveau peut être individuel ou collectif.

EP 0 440 543 A1

Jouve, 18, rue Saint-Denis, 75001 PARIS

# CATALYSEUR POUR FILTRE D'EPURATION DE CAVEAU

La présente invention concerne un catalyseur pour filtre d'épuration des gaz échangés entre l'intérieur d'un caveau et l'extérieur.

Les brevets français numéros 2 549 515, 2 527 677 et 2 612 550 décrivent des caveaux ou tombes mortuaires et concernent plus particulièrement des perfectionnements pour l'élimination des gaz malodorants. Ces brevets décrivent notamment un système d'enfeus collectifs comprenant des cases individuelles en béton armé juxtaposées horizontalement et verticalement, caractérisé en ce qu'à l'intérieur de chaque case débouche au moins un conduit de ventilation relié à un dispositif d'aspiration forcée par l'intermédiaire d'un filtre et en ce qu'un bac amovible de faible profondeur en matière plastique est disposé à l'intérieur de chaque case pour recevoir le cercueil.

Ces brevets décrivent ainsi un système d'enfeus collectifs caractérisé en ce que le conduit de ventilation est raccordé à une colonne montante en matière plastique noyée dans la paroi verticale séparant deux cases contiguës, cette colonne montante débouchant à son extrémité inférieure dans un bac étanche assurant l'évaporation de l'eau de condensation, tandis que son extrémité supérieure est raccordée à un collecteur commun disposé en terrasse et aboutissant au filtre.

Le filtre est constitué de deux cartouches filtrantes successives remplies d'un catalyseur, la cartouche dans laquelle débouche le collecteur comportant en outre, par exemple, des billes d'alumine imprégnées d'un insecticide permanent.

La demande de brevet français N° 89 05 493 décrit un dispositif pour l'épuration des gaz échangés entre l'intérieur d'un caveau individuel et l'exterieur. Ce dispositif comporte un boîtier amovible, disposé à l'intérieur du caveau, renfermant une poudre de produits pulvérulents et adsorbants et raccordé à un tube fixé à demeure dans la paroi du caveau. Cette poudre est constituée de préférence de charbon actif auquel peuvent être ajoutés des catalyseurs qui améliorent les performances du charbon actif.

Le but de la présente invention est de perfectionner les filtres pour enfeus, caveaux individuels ou collectifs, décrits ci-dessus par l'emploi d'un catalyseur spécialement approprié à la technologie des enfeus et caveaux. Le catalyseur peut être utilisé sans charbon actif ou en association avec du charbon actif.

Ainsi selon la présente invention on utilisera dans le filtre d'épuration, un catalyseur renfermant au moins un composant (par exemple sous forme pulvérulente par exemple billes, extrudés concasssés) choisi dans le groupe constitué par une matière amorphe et par une zéolite. On pourra ainsi utiliser comme matière amorphe par exemple l'alumine, la silice, la magnésie, l'argile, l'oxyde de titane, la zircone, les combinaisons de deux au moins de ces composés et les combinaisons alumine-oxyde de bore.

A titre d'exemple de combinaisons d'au moins deux composés du groupe ci-avant, on peut citer la silice-alumine et la silice-magnésie.

Comme constituant préféré, on peut citer la silice, l'alumine, la magnésie et les mélanges silice-alumine et silice-magnésie.

Lorsqu'on utilise une zéolite, on pourra, à titre d'exemples, utiliser une zéolite Y acide ou non, une zéolite X (notamment à structure faujasite), une zéolite L, une zéolite A, les zéolites de la famille de l'offrétite (naturelle ou synthétique et en particulier les offrétites stabilisées et/ou désaluminées) de type érionite ou érionite T, les diverses zéolites ZSM-5 (incluant la MFI), ZSM-8, ZSM-11, ZSM-12 etc..., les zéolites de type ferrierite, de type mordénite, de type chabazite, les zéolites oméga (ou de type mazzite), les zéolites précédemment citées de type à petits pores.

On pourra utiliser avantageusement comme catalyseur, un mélange d'au moins un matériel amorphe et d'au moins un matériel zéolitique (ou alumino silicate). Le matériel amorphe joue alors le rôle d'une matrice sur laquelle est déposé le matériel zéolitique. Il peut être alors aussi avantageux d'inclure dans le catalyseur une fonction hydrogénante.

Ainsi, les catalyseurs sont alors du type bifonctionnel associant une fonction acide à une fonction hydrogénante. La fonction acide est apportée par des supports de grandes surfaces (150 à 800 m2.g-1 environ) présentant une acidité superficielle, tels que les alumines halogénées (chlorées ou fluorées notamment), les combinaisons d'oxydes de bore et d'aluminium, les silice-alumines amorphes etc... et les zéolites. La fonction hydrogénante est apportée soit par un ou plusieurs métaux du groupe VIII de la classification périodique des éléments, tels que le nickel, le palladium ou le platine par exemple, soit par une association d'au moins deux métaux choisis parmi les groupes VI de la classification périodique, molybdène et tungstène notamment, et VIII de la même classification, cobalt et nickel notamment, deux au moins des métaux de cette association appartenant à deux groupes différents (VI et VIII précédemment cités).

L'équilibre entre les deux fonctions acide et hydrogénante est un paramètre important qui régit l'activité et la sélectivité du catalyseur.

Le catalyseur utilisé et en particulier la zéolite utilisée soit seule, soit en combinaison avec une matrice peut renfermer en outre éventuellement un ou plusieurs éléments métalliques couramment utilisés dans les catalyseurs de raffinage, en particulier les métaux de la famille des terre-rares, le catalyseur selon l'invention pouvant également avantageusement renfermer des quantités minimes, inférieures à 1000 ppm par exemple, de rhénium (groupe VII) ou d'un métal noble de la famille du platine (platine, palladium, iridium, osmium, rhodium, ruthénium) et/ou un autre métal (par exemple 0,01 à 5 %) sous forme d'oxyde notamment, tel que le manganèse (groupe VII), le fer, le cobalt, le nickel, le chrome et le manganèse, etc... .

Lorsque le catalyseur utilisé renferme à la fois une matrice amorphe et un alumino silicate (zéolite), le catalyseur peut renfermer par exemple et à titre non limitatif

(a) 50 à 95 % d'au moins une matrice,

(b) 5 à 50 % d'au moins une zéolite.

Le catalyseur peut renfermer également jusqu'à 20% d'au moins un métal ou composé de métal additionnel tel que défini ci-dessus (métal des groupes VI et VIII par exemple).

## Revendications

1. Catalyseur pour filtre d'épuration des gaz échangés entre l'extérieur et l'intérieur d'un caveau ou d'un enfeu caractérisé en ce qu'il renferme au moins un composant choisi dans le groupe constitué par une matière amorphe et une zéolite.

2. Catalyseur selon la revendication 1 caractérisé en ce qu'il renferme un mélange d'au moins une matière amorphe et d'au moins une zéolite.

3. Catalyseur selon l'une quelconque des revendications 1 et 2 caractérisé en ce que la matière amorphe est choisie dans le groupe constitué par les alumines, les silices, les magnésies, les argiles, l'oxyde de titane, la zircone, les combinaisons de deux au moins de ces composés et les combinaisons alumine-oxyde de bore.

4. Catalyseur selon l'une quelconque des revendications 1 à 3 caractérisé en ce que la zéolite est choisie dans le groupe constitué par les zéolites X, Y, A, L, oméga, les zéolites de la famille de l'offretite, les ZSM, les zéolites de type ferrierite, mordénite, chabazite.

5. Catalyseur selon l'une quelconque des revendications 1 à 4, caractérisé en ce qu'il renferme en outre au moins un métal du groupe VIII de la classification périodique des éléments.

6. Catalyseur selon l'une quelconque des revendications 1 à 4, caractérisé en ce qu'il renferme en outre une association d'au moins deux métaux des groupes VI et VIII de la classification périodique des éléments, deux au moins des métaux de cette association appartenant à deux groupes différents de la classification périodique des éléments.

7. Catalyseur selon l'une quelconque des revendications 1 à 6 caractérisé en ce qu'il renferme en outre au moins un métal de la famille des terres-rares.

8. Catalyseur selon l'une quelconque des revendications 1 à 7, caractérisé en ce qu'il renferme en outre au moins un métal ou oxyde métallique du groupe VII de la classification périodique des éléments.

Office européen
des brevets

RAPPORT DE RECHERCHE EUROPEENNE

Numero de la demande

EP    91 40 0194

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4077913 (G.J.K.ACRES ET AL.)<br>* colonne 5, lignes 7 - 32; revendications 1, 8, 13 *<br>--- | 1-8 | B01D53/36<br>E04H13/00 |
| A | BE-A-897438 (G B A)<br>* revendications 1, 3 *<br>--- | 1 | |
| A | DE-A-2940810 (TAKEDA CHEMICAL INDUSTRIES)<br>* revendication 1 *<br>----- | 1 | |

DOMAINES TECHNIQUES
RECHERCHES (Int. Cl.5)

B01D
E04H

Le présent rapport a été établi pour toutes les revendications

| Lieu de la recherche | Date d'achèvement de la recherche | Examinateur |
|---|---|---|
| BERLIN | 27 MAI 1991 | BERTRAM H.E.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)